# EUROPEAN PATENT SPECIFICATION

(11) **EP 1 665 448 B1**
(45) Date of publication and mention of the grant of the patent: **14.09.2011**
(21) Application number: 04738007.6
(22) Date of filing: 23.07.2004
(51) Int. Cl.: H01M 10/50, H01M 10/0565

(54) **POLYMER BATTERIES HAVING THERMAL EXCHANGE APPARATUS**
POLYMER-BATTERIEN MIT THERMOAUSTAUSCH-VORRICHTUNG
BATTERIES POLYMERES COMPORTANT UN DISPOSITIF D'ECHANGE THERMIQUE

(30) Priority: 31.07.2003 US 630677
(43) Date of publication of application: 07.06.2006
(73) Proprietor: Bathium Canada Inc., Boucherville, QC J4B 7Z7 (CA)
(72) Inventor: FOGAING, Michael, Montreal, Quebec H1K 2W1 (CA); LAGÜE, Frédéric, Boucherville, Quebec J4B 2A7 (CA); GEOFFROY, Sébastien, Montreal, Quebec H2S 2E6 (CA); GILBERT, Guy, Boucherville, Quebec J4B 6E6 (CA)
(74) Representative: Quantin, Bruno Marie Henri
(86) International application number: PCT/CA2004/001088
(87) International publication number: WO 2005/013407

(56) References cited:
- EP-A- 0 665 603
- US-A- 4 578 324
- US-A- 4 614 025
- US-A- 6 013 388
- US-A- 6 117 584

## Description

### Field of the invention

The present invention relates generally to polymer batteries and more specifically to a thermal exchange apparatus for polymer batteries.

### Background of the invention

Rechargeable batteries manufactured from laminates of solid polymer electrolytes and sheet-like anodes and cathodes display many advantages over conventional liquid electrolyte batteries. These advantages include having a lower overall battery weight, a higher power density, a higher specific energy and a longer service life, as well as being environmentally friendly since the danger of spilling toxic liquid into the environment is eliminated.

Solid polymer electrochemical cell components include positive electrodes, negative electrodes and a separator material capable of permitting ionic conductivity, such as a solid polymer electrolyte sandwiched between each anode and cathode. The anodes (or negative electrodes) and the cathodes (or positive electrodes) are made of material capable of reversibly intercalating alkali metal ions.

Such advanced battery systems typically produce a significant amount of heat which, if not properly dissipated, can result in a thermal runaway condition and irreversible damages to the electrochemical cells. The thermal characteristics of a polymer electrochemical cell battery must therefore be understood and appropriately considered when designing a battery system suitable for use in commercial and consumer devices and systems. The conventional approach of providing an external heat transfer mechanism for example, is inadequate to effectively dissipate heat from internal portions of the polymer electrochemical cell battery.

Other characteristics of polymer battery technologies provide additional challenges for the thermal exchange mechanism. For example, solid polymer cell structures are subject to cyclical changes in volume as a consequence of variations in the state of charge of the cell. The total volume of such cells may vary by as much as five to six percent or more during charge and discharge cycling. Such repetitive changes in the physical size of a cell significantly complicate the mechanical design and the thermal management strategy. The volume change of the cells implies that the position of each cell of the battery relative to the protective casing will vary with the state of charge of the battery. Since heat generated by the individual cells of a polymer battery in high discharge mode must be channeled quickly and efficiently to the exterior of the battery for dissipation in order to maintain the battery temperature in an optimal temperature range, the heat exchange mechanism must be able to provide a path for thermal energy regardless of the particular position of each electrochemical cell within the casing of the polymer battery.

Thus, there is a need in the polymer battery industry for a thermal exchange apparatus incorporated within a polymer battery casing which is adapted to efficiently channel thermal energy between the interior of the battery and the exterior of the battery.

Prior art US4614025 describes a cooling system for a battery.

### Statement of the Invention

It is therefore an object of the present invention to provide a thermal exchange apparatus incorporated within a polymer battery casing that provides an efficient thermal path to dissipate the thermal energy generated by the electrochemical cells of a polymer battery regardless of the particular position of each electrochemical cell within the casing of the polymer battery.

According to a first broad aspect, the invention provides a polymer electrochemical generator comprising:
- a plurality of electrochemical cells, each comprising a plurality of electrochemical laminates and at least one current collecting terminal having arms adapted to receive said plurality of electrochemical laminates;
- a resilient heat sink material positioned adjacent and in mechanical contact with the current collecting terminals, the resilient heat sink material being electrically resistive and thermally conductive;
- a thermally conductive structural housing having walls enclosing the plurality of electrochemical cells and the resilient heat sink material, an inner surface of at least one of the walls being positioned adjacent the resilient heat sink material and in thermal contact with the resilient heat sink material, an outer surface of the at least one wall adapted to dissipate thermal energy generated by the plurality of electrochemical cells, and a low friction film positioned between the resilient heat sink material and the inner surface of the walls of the thermally conductive structural housing. This film is adapted to ease relative movement between the resilient heat sink material and the walls of the structural housing.

In a specific, non-limiting example of implementation, the resilient heat sink material conforms at least partially to the contours of the current collecting terminal. The resilient heat sink material may be made of different types of resilient material that are electrically resistive and thermally conductive, such as a silicone elastomer compound including a thermally conductive ceramic filler.

According to a second broad aspect, the invention further provides a polymer electrochemical generator comprising:
- a plurality of electrochemical cells, each comprising a plurality of electrochemical laminates and at least one current collecting terminal having arms adapted to receive said plurality of electrochemical laminates;
- resilient heat sink pads positioned adjacent and in mechanical contact with the current collecting terminals, the resilient heat sink pads being electrically resistive and thermally conductive;
- a thermally conductive structural housing having walls enclosing the plurality of electrochemical cells and the resilient heat sink material, an inner surface of at least one of the walls being positioned adjacent the resilient heat sink material and in thermal contact with the resilient heat sink material, an outer surface of the at least one of the walls being adapted to dissipate thermal energy generated by the plurality of electrochemical cells;
- a low friction film positioned between the resilient heat sink pads and the inner surface of the at least one of the walls, the film adapted to ease relative movement between the resilient heat sink pads and the at least one of the walls; and
- a heat exchange apparatus positioned adjacent the outer surface of the at least one of the walls wherein the heat exchange apparatus is adapted to transfer thermal energy from the outer surface of the at least one of the walls to a fluid medium.

### Brief description of the drawings

The invention will be better understood and other advantages will appear by means of the following description and the following drawings in which:
Figure 1 is a schematic cross-sectional view of a polymer battery according to a non-limiting example of implementation of the present invention;
Figure 2 is a enlarged cross-sectional view of a portion of the polymer battery shown in Figure 1;
Figure 3 is a partial perspective view of a plurality of stacked electrochemical cells forming a polymer battery illustrating a possible example of implementation of the electrical current path for the battery;
Figure 4 is a schematic cross-sectional view of a polymer battery according to a variant example of implementation of the present invention; and
Figure 5 is a schematic cross-sectional view of a polymer battery according to another variant example of implementation of the present invention.

### Detailed description of the invention

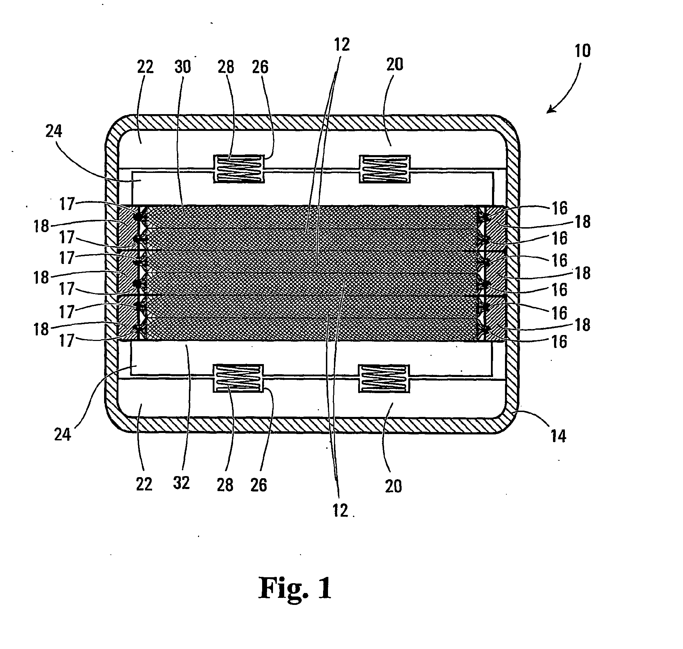

In Figure 1, there is shown for illustration purposes a specific, non-limiting example of implementation of a polymer battery 10 configuration comprising a prismatic assembly of electrochemical cells 12 stacked together. The polymer battery 10 comprises a housing or enclosure 14, a series of stacked electrochemical cells 12 each comprising a plurality of individual electrochemical laminates connected together in parallel by current collecting terminals 16 and 17, resilient heat sink pads 18 positioned adjacent the current collecting terminals 16 and 17 and in intimate mechanical contact with the terminals 16 and 17, and a pressure system 20 located at each end of the electrochemical cells stack and adapted to maintain under pressure the electrochemical cells 12. Individual electrochemical laminates generally comprise an anode layer, a polymer electrolyte separator layer, a cathode layer and at least one current collector. Each electrochemical laminate typically has a thickness in the order of 80 to 300 microns.

In the example shown in Figure 1, one possible implementation of the pressure system 20 is depicted. The pressure system 20 is formed of a first plate 22 and a second plate 24, each comprising a plurality of cavities 26 in which springs 28 are installed. The first plates 22 rest on the inner walls of the casing 14, the second plates 24 contact the lateral surfaces of electrochemical cells 30 and 32 located at each end of the electrochemical cells stack, and springs 28 push the adjacent plates 22 and 24 apart such that second plates 24 apply an even pressure on the entire electrochemical cells stack. Maintaining the electrochemical cells stack under pressure provides more intimate contacts between the various layers of each laminate forming an electrochemical cell 12, prevents potential delamination, generally improves the overall performance and life of a polymer battery having a prismatic configuration of electrochemical cells 12, and is therefore desirable.

Note that the pressure system 20 depicted in Figure 1 is only one example of a variety of different pressure systems capable of applying pressure onto an electrochemical cells stack. The scope of the present invention is not limited to any one particular implementation of the pressure system 20.

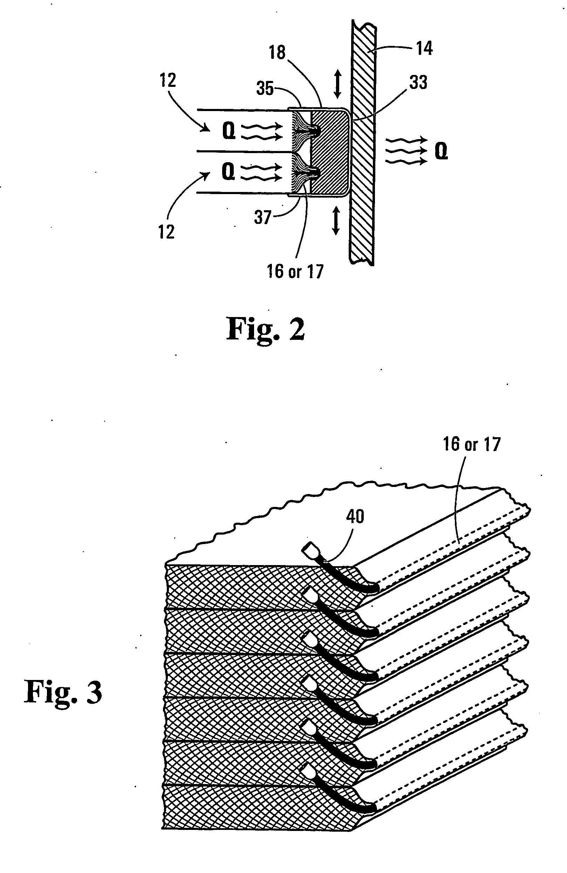

In the specific example of implementation shown in Figures 1 and 2, current collecting terminals 16 and 17 are current collection metallic devices having arms in a spaced apart relationship. These arms define a recess that receives the extremities of the cathode current collectors and/or of the anodes of each electrochemical laminate, such that the arms of the current collecting terminals 16, 17 overlap a portion of the electrochemical cells 12. Current collecting terminals 16 and 17 are primarily adapted to conduct electrical current in and out of the electrochemical cells 12, but also to conduct thermal energy in and out of the electrochemical cells 12. The current collecting terminals may also provide electrical connection between two adjacent electrochemical cells 12.

Current collecting terminals 16 are crimped or otherwise connected to the length of the cathode current collector edges extending from one side of each laminate of an electrochemical cell 12. Current collecting terminals 17 are crimped or otherwise connected to the length of the anode film layer edges extending from the opposite side of each laminate of an electrochemical cell 12. Current collecting terminals 16 and 17 are preferably made of copper; however, other electrically conductive materials, such as aluminum, silver, brass and alloys thereof, are also suitable. As shown in Figure 3, current collecting terminals 16 are disposed along the entire length of the cathode side of each electrochemical cell 12 and current collecting terminals 17 are disposed along the entire length of the anode side of each electrochemical cell 12. Electrical connection leads 40 are typically connected to terminals 16 and 17 to monitor the state of each electrochemical cell 12 through an electronic control system, and to conduct charge and discharge current in and out of the electrochemical cells 12 through a busbar (not shown) to outside positive and negative electrical connections of the battery when such a configuration is used. Other electrical connection configurations are of course contemplated, such as direct series or parallel connections of the electrochemical cells 12 through the current collecting terminals 16 and 17 and to outside positive and negative electrical connections. During charge and discharge cycling, electrical current is conducted through the current collecting terminals 16 or 17, and through outside positive and negative electrical connections.

During electrical discharge, the electrochemical cells 12 produce an appreciable amount of thermal energy which is preferentially conducted along the anode and cathode films of each laminate, thus sharing the same conductivity path as that for the electrical energy produced, and through the current collecting terminals 16 or 17. As such, the current collecting terminals 16 and 17 respectively disposed along the edge portions of the extended anode and cathode film layers of each electrochemical cell 12 provide a site for establishing both electrical and thermal connectivity with the exterior.

Heat generated by the electrochemical cells 12 is transferred through the length of current collecting terminals 16 and 17, to an adjacently disposed heat sink material, such as resilient pads 18, and onto an adjacent wall of housing 14.

As is shown in Figure 2, the current collecting terminals 16 and 17 provide a thermal flux path for transferring thermal energy Q between the electrochemical cells 12 and an electrically resistive, thermally conductive, resilient heat sink material 18. This heat sink material 18 is located adjacent and in intimate mechanical contact with the current collecting terminals 16 and 17. Thermal energy Q is then transferred from resilient heat sink material 18 to the inner surface of the wall of housing 14 positioned adjacent and in thermal contact with resilient heat sink material 18. The housing 14 is a thermally conductive structure, made of metallic, plastic or composite material, such that thermal energy Q is transferred through its walls to an outer surface of the walls, which is adapted to dissipate the thermal energy Q generated by electrochemical cells 12.

Note that resilient heat sink material 18 as described herein refers to a resilient material that permits heat to be conducted therethrough, yet is electrically resistive to the flow of current relative to the current path provided along the length of current collecting terminals 16 and 17. In a specific example, the heat sink material is in the form of pads or ribbons of heat sink material extending along the length of the current collecting terminals 16 or 17.

The resilient heat sink material 18 is separated into a plurality of ribbons in the form of pads extending along the length of the current collecting terminals 16 and 17. The heat sink pads 18 extend along the entire length of the current collecting terminals 16 and 17, such that the contact surface area is large for efficient thermal energy transfer. Heat sink pads 18 have a thickness that permits a sufficient amount of thermal energy to be conducted therethrough but is resistive to electrical current relative to the preferred electrical current path provided by the current collecting terminals 16 and 17. By way of example, the thickness of heat sink pads 18 may vary between 2mm and 10mm.

The heat sink pads 18 illustrated in Figures 1 and 2 may be made of different types of electrically resistive, thermally conductive material. In one example, the heat sink pads 18 are made of a silicone elastomer compound including a thermally conductive ceramic filler, such as Beryllium Oxide, Boron Nitride, and Alumina or aluminium oxide. The silicone elastomer compound is a compressible yet slightly sticky material having a yielding consistency that enables it to conform at least partially to the contours of the current collecting terminals 16 and 17 as shown in Figures 1 and 2, thereby increasing the contact surface area between heat sink pads 18 and current collecting terminals 16 and 17. The thermal conductivity coefficient of the silicone elastomer is typically about 2 W/m-K to 6 W/m-K.

Note that the resiliency of the heat sink pads 18 also provides dampening for the electrochemical cells 12 against vibrations or mechanical shocks transferred from the housing 14.

As previously mentioned, solid polymer electrochemical cell structures are subject to cyclical changes in volume as a consequence of variations in the state of charge of the cell. The total volume of each electrochemical cell 12 may vary significantly during charge and discharge cycling, for example by as much as eight percent. Even with an adequate pressure system 20 to maintain the electrochemical cells stack under pressure, the variation of volume of each electrochemical cell 12 implies a lateral movement of each cell 12. Although this lateral movement is relatively small for the cells positioned in the middle of the stack, it is quite significant for the cells positioned at the extremities of the stack, such as cells 30 and 32. The volume change of each cell 12 is compounded to displace an adjacent cell 12 towards the outside or, in the particular configuration of Figure 1, towards the second plates 24 of the pressure system 20, such that the cells 30 and 32 positioned at the ends of the stack have a significant displacement relative to housing 14. The pressure system 20 maintains pressure on the electrochemical cells stack but permits this lateral movement of each cell 12.

As shown in Figure 2, in order to accommodate the lateral movements of the electrochemical cells 12 and their respective current collecting terminals 16 and 17, the heat sink pads 18 are provided with thin backing films 33 having a low friction coefficient. These low friction films 33 allow the heat sink pads 18 to follow the lateral movement of the electrochemical cells 12. Each thin backing film 33 is positioned between the respective heat sink pad 18 and the inner wall of housing 14, such that the assembly formed of the backing film 33 and the heat sink pad 18 may slide relatively smoothly along the inner wall of housing 14, thereby preventing undue mechanical strain on current collecting terminals 16 and 17 when movement of the latter occurs. The backing film 33 and heat sink pad 18 assembly is juxtaposed to a restricted number of current collecting terminals 16 and 17, to further prevent mechanical strain on the current collecting terminals 16 and 17 when electrochemical cells 12 expand and contract.

While the backing film 33 may be less thermally conductive than the heat sink pad 18, the film 33 still provides an uninterrupted thermal path for thermal flux Q. The backing film 33 is shaped to confine the respective heat sink pad 18 to its respective current collecting terminals 16 and 17 and as such comprises a pair of arms 35 and 37 extending towards electrochemical cells 12. In the example of implementation shown in Figures 1 and 2, each arm 35, 37 extends between two adjacent cells 12. Backing film 33 therefore acts as a low friction support for the respective heat sink pad 18 and as a circumscribing element to position and maintain the heat sink pad 18 juxtaposed to its corresponding current collecting terminal or terminals 16, 17. In a specific, non-limiting example, the backing film 33 is a 0.03 to 0.3mm thick polypropylene, polyimide or polyethylene film, shaped to circumscribe the respective heat sink pad 18. In another example, the backing film 33 is a Kapton© film or an anodized aluminum film. The material of the backing film 33 is chosen for its compatibility with the various components of the electrochemical cells, its thermal conductivity and its friction coefficient.

In a variant example of implementation of the present invention, the backing film 33 may be replaced by a liquid or gel lubricant film applied either on the respective heat sink pad 18 or on the inner wall of housing 14 or both, for easing relative movements between the heat sink pad 18 and the inner wall of housing 14.

In the aforementioned examples of implementation, each heat sink pad 18 is associated with a pair of electrochemical cells 12. Alternatively, each heat sink pad 18 may be juxtaposed or combined to a single electrochemical cell 12, or to three or more electrochemical cells 12, depending on the expansion rate and lateral displacements of the particular electrochemical cell design.

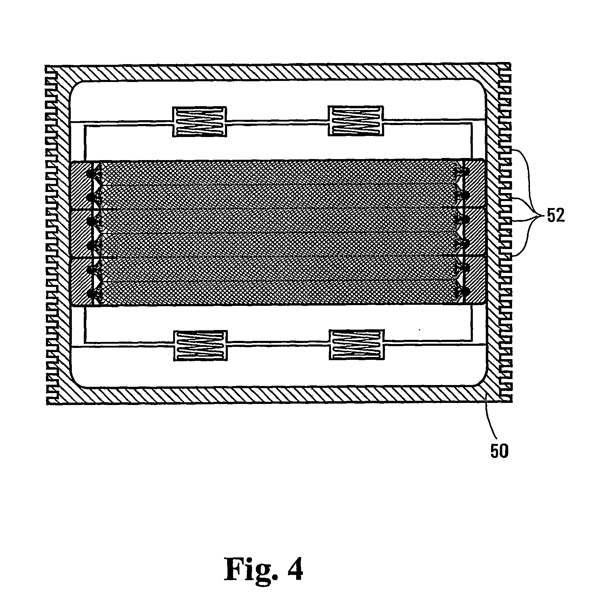

Figure 4 illustrates another variant example of implementation of a polymer battery according to the present invention, in which the housing 50 is provided with a heat exchange apparatus positioned adjacent the outer surface of its walls or integrated into its walls. The heat exchange apparatus is adapted to increase the capacity of the outer surface of the walls for increased dissipation of thermal energy. In Figure 4, the housing 50 is provided with finned outer walls, including a series of projecting vanes 52 used for cooling. Air circulating around the projecting vanes 52 serves to dissipate the thermal energy generated by the electrochemical cells 12. In a specific example, the amount of air circulating around the vanes 52 may be adjusted by using a fan (not shown), which produces an air stream around the finned outer walls of housing 50.

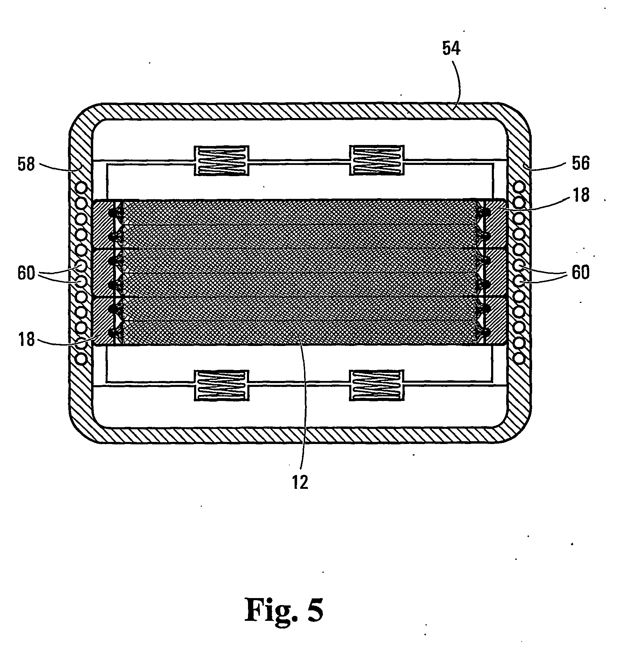

Figure 5 illustrates yet another variant example of implementation of a polymer battery according to the present invention, in which the housing 54 includes channels 60 provided within the walls 56 and 58 adjacent the heat sink pads 18. Heat transfer or dissipation is accomplished by circulating a coolant fluid in liquid form through the channels 60 of housing 54. Thermal energy is transferred from the electrochemical cells 12 to the coolant via current collecting terminals 16 and 17 of the type described hereinabove. More specifically, the current collecting terminals 16, 17 are attached to the cells 12 and are in mechanical contact with the heat sink pads 18, which are in thermal contact with the housing walls 56 and 58 that transfer thermal energy to the circulating coolant liquid. The rate at which heat is removed from the cells 12, or introduced into the cells 12 if heating of the cells 12 is required, is dependent in part on the temperature and flow rate of the coolant fluid circulating through channels 60.

In some instances, such as in cold weather, the optimal operating temperature of the electrochemical cells of the battery is significantly higher than the ambient temperature. In such instances, heat may be supplied to the electrochemical cells through the heat exchange apparatus and the heat sink pads 18 in order to raise the temperature of the electrochemical cells or to maintain the electrochemical cells at their operating temperature.

In the polymer battery examples shown in Figures 1 and 3 to 5, a series of six electrochemical cells 12 are shown in the cell stack. Note however that a variety of cell stack configurations are possible without departing from the scope of the present invention. For example, up to thirty-two electrochemical cells 12 may be stacked within the housing 14 shown in Figure 1. The design of the electrochemical cells themselves may vary significantly, such that a larger number or a smaller number of electrochemical laminates may be stacked together.

Although various embodiments have been illustrated, this was for the purpose of describing, but not limiting, the invention. Various modifications will become apparent to those skilled in the art and are within the scope of this invention, which is defined more particularly by the attached claims.

## Claims

1. A polymer electrochemical generator comprising:
- a plurality of electrochemical cells, each comprising a plurality of electrochemical laminates and at least one current collecting terminal, said current collecting terminal having arms adapted to receive said plurality of electrochemical laminates ;
- a resilient heat sink material positioned adjacent and in mechanical contact with said at least one current collecting terminal, said resilient heat sink material being electrically resistive and thermally conductive;
- a thermally conductive structural housing having walls enclosing said plurality of electrochemical cells and said resilient heat sink material, an inner surface of at least one of said walls being positioned adjacent said resilient heat sink material and in thermal contact with said resilient heat sink material, an outer surface of said at least one of said walls being adapted to dissipate thermal energy generated by said plurality of electrochemical cells; and
- a low friction film (33) positioned between the resilient heat sink material (18) and the inner surface of said at least one of said walls, said film adapted to ease relative movement between said resilient heat sink material and said at least one of said walls.

2. A polymer electrochemical generator as defined in claim 1, wherein said resilient heat sink material conforms at least partially to the contours of said at least one current collecting terminal.

3. A polymer electrochemical generator as defined in claim 1, wherein said resilient heat sink material is separated into a plurality of pads extending along the length of said at least one current collecting terminal.

4. A polymer electrochemical generator as defined in claim 3, wherein each one of said plurality of pads comprises a band of low friction film positioned between the resilient heat sink material and the inner surface of said at least one of said walls.

5. A polymer electrochemical generator as defined in claim 4, wherein said band of low friction film comprises inward extensions adapted to circumscribe and separate each pad of resilient heat sink material from adjacent ribbons.

6. A polymer electrochemical generator as defined in claim 1, further comprising a heat exchange apparatus positioned adjacent said outer surface of said at least one of said walls, said heat exchange apparatus being adapted to transfer thermal energy from said outer surface of said at least one of said walls to a fluid medium.

7. A polymer electrochemical generator as defined in claim 6, wherein said heat exchange apparatus comprises projecting vanes adapted to dissipate thermal energy generated by said electrochemical cells.

8. A polymer electrochemical generator as defined in claim 6, wherein said heat exchange apparatus includes channels provided within said at least one of said walls, wherein heat transfer is accomplished by circulating a coolant fluid in liquid form through said channels.

9. A polymer electrochemical generator as defined in claim 7, wherein air is circulated around said projecting vanes to dissipate thermal energy generated by said electrochemical cells.

10. A polymer electrochemical generator as defined in claim 1, wherein said resilient heat sink material is in the form of pads extending along the length of said plurality of electrochemical cells.

11. A polymer electrochemical generator as defined in claim 1, wherein said resilient heat sink material is a silicone elastomer compound including a thermally conductive ceramic filler.

12. A polymer electrochemical generator as defined in claim 11, wherein said thermally conductive ceramic filler is selected from the group consisting of Beryllium Oxide, Boron Nitride, Alumina and aluminum oxide.

13. A polymer electrochemical generator comprising:
- a plurality of electrochemical cells, each comprising a plurality of electrochemical laminates and at least one current collecting terminal, said current collecting terminal having arms adapted to receive said plurality of electrochemical laminates ;
- resilient heat sink pads positioned adjacent and in mechanical contact with said at least one current collecting terminal, said resilient heat sink pads being electrically resistive and thermally conductive;
- a thermally conductive structural housing having walls enclosing said plurality of electrochemical cells and said resilient heat sink pads, an inner surface of at least one of said walls being positioned adjacent said resilient heat sink pads and in thermal contact with said resilient heat sink pads, an outer surface of said at least one of said walls being adapted to dissipate thermal energy generated by said plurality of electrochemical cells;
- a low friction film (33) positioned between said resilient heat sink pads (18) and the inner surface of said at least one of said walls, said film adapted to ease relative movement between said resilient heat sink pads and said at least one of said walls ; and
- a heat exchange apparatus positioned adjacent said outer surface of said at least one of said walls, said heat exchange apparatus being adapted to transfer thermal energy from said outer surface of said at least one of said walls to a fluid medium.

## Patentansprüche

1. Polymerelektrochemischer Generator, umfassend:
- eine Mehrzahl elektrochemischer Zellen, die jeweils eine Mehrzahl elektrochemischer Laminate und mindestens eine stromabnehmende Anschlußklemme umfassen, wobei die genannte stromabnehmende Anschlußklemme Arme aufweist, die angepasst sind, um die genannte Mehrzahl elektrochemischer Laminate aufzunehmen;
- ein elastisches Wärmesenkenmaterial, das angrenzend an und in mechanischem Kontakt mit der genannten, mindestens einen stromaufnehmenden Anschlußklemme positioniert ist, wobei das elastische Wärmesenkenmaterial elektrisch resistiv und thermisch leitend ist;
- ein thermisch leitendes Strukturgehäuse, das Wände aufweist, die die genannte Mehrzahl elektrochemischer Zellen und das genannte elastische Wärmesenkenmaterial einschließen, wobei eine innere Oberfläche mindestens einer der genannten Wände angrenzend an das genannte elastische Wärmesenkenmaterial und in thermischem Kontakt mit dem genannten elastischen Wärmesenkenmaterial angeordnet ist, eine äußere Oberfläche der genannten, mindestens einen der genannten Wände angepasst ist, um die durch die genannte Mehrzahl elektrochemischer Zellen erzeugte thermische Energie abzuleiten; und
- einen Film (33) mit geringer Reibung, der zwischen dem elastischen Wärmesenkenmaterial (18) und der inneren Oberfläche der genannten, mindestens einen der genannten Wände angeordnet ist, wobei der genannte Film angepasst ist, um die Relativbewegung zwischen dem genannten elastischen Wärmesenkenmaterial und der genannten, mindestens einen der genannten Wände zu erleichtern.

2. Polymerelektrochemischer Generator wie in Anspruch 1 definiert, wobei das genannte elastische Wärmesenkenmaterial mindestens teilweise den Konturen der genannten, mindestens einen stromabnehmenden Anschlußklemme entspricht.

3. Polymerelektrochemischer Generator wie in Anspruch 1 definiert, wobei das genannte elastische Wärmesenkenmaterial in eine Mehrzahl von Lagen unterteilt ist, die sich über die Länge der genannten, mindestens einen stromabnehmenden Anschlußklemme erstrecken.

4. Polymerelektrochemischer Generator wie in Anspruch 3 definiert, wobei jeder Einzelne der genannten Mehrzahl von Lagen ein Band aus einem Film mit geringer Reibung umfasst, der zwischen dem elastischen Wärmesenkenmaterial und der inneren Oberfläche der genannten, mindestens einen der genannten Wände angeordnet ist.

5. Polymerelektrochemischer Generator wie in Anspruch 4 definiert, wobei das genannte Band aus einem Film mit geringer Reibung innere Verlängerungen umfasst, die angepasst sind, um jede Lage aus elastischem Wärmesenkenmaterial abzugrenzen und von benachbarten Bändern zu trennen.

6. Polymerelektrochemischer Generator wie in Anspruch 1 definiert, ferner umfassend eine Wärmeaustausch-Vorrichtung, die angrenzend an die genannte äußere Oberfläche der genannten, mindestens einen der genannten Wände angeordnet ist, wobei die genannte Wärmeaustausch-Vorrichtung zur Übertragung thermischer Energie von der genannten äußeren Oberfläche der genannten, mindestens einen der genannten Wände zu einem flüssigen Medium angepasst ist.

7. Polymerelektrochemischer Generator wie in Anspruch 6 definiert, wobei die genannte Wärmeaustausch-Vorrichtung abstehende Flügel umfasst, die angepasst sind, um die durch die genannten elektrochemischen Zellen erzeugte thermische Energie abzuleiten.

8. Polymerelektrochemischer Generator wie in Anspruch 6 definiert, wobei die genannte Wärmeaustausch-Vorrichtung mit Kanälen versehen ist, die innerhalb der genannten, mindestens einen der genannten Wände vorgesehen sind, wobei Wärmeübertragung durch Umwälzen eines Kühlungsfluids in flüssiger Form durch die genannten Kanäle durchgeführt wird.

9. Polymerelektrochemischer Generator wie in Anspruch 7 definiert, wobei Luft um die genannten abstehenden Flügel umgewälzt wird, um die durch die genannten elektrochemischen Zellen erzeugte thermische Energie abzuleiten.

10. Polymerelektrochemischer Generator wie in Anspruch 1 definiert, wobei das genannte elastische Wärmesenkenmaterial in Form von Lagen vorliegt, die sich über die Länge der genannten Mehrzahl elektrochemischer Zellen erstrecken.

11. Polymerelektrochemischer Generator wie in Anspruch 1 definiert, wobei das genannte elastische Wärmesenkenmaterial eine Silikonelastomerverbindung ist, die einen thermisch leitenden, keramischen Füllstoff umfasst.

12. Polymerelektrochemischer Generator wie in Anspruch 11 definiert, wobei der genannte, thermisch leitende, keramische Füllstoff aus der Gruppe ausgewählt ist, bestehend aus Berylliumoxid, Bornitrid, Tonerde und Aluminiumoxid.

13. Polymerelektrochemischer Generator, umfassend:
- eine Mehrzahl elektrochemischer Zellen, die jeweils eine Mehrzahl elektrochemischer Laminate und mindestens eine stromabnehmende Anschlußklemme umfassen, wobei die genannte stromabnehmende Anschlußklemme Arme aufweist, die angepasst sind, um die genannte Mehrzahl elektrochemischer Laminate zu empfangen;
- ein elastisches Wärmesenkenmaterial, das angrenzend an und in mechanischem Kontakt mit der genannten, mindestens einen stromabnehmenden Anschlußklemme angeordnet ist, wobei das elastische Wärmesenkenmaterial elektrisch resistiv und thermisch leitend ist;
- ein thermisch leitendes Strukturgehäuse, das Wände aufweist, die die genannte Mehrzahl elektrochemischer Zellen und die genannten elastischen Wärmesenkenpolster einschließen, wobei eine innere Oberfläche mindestens einer der genannten Wände angrenzend an die genannten elastischen Wärmesenkenpolster und in thermischem Kontakt mit den genannten elastischen Wärmesenkenpolstern angeordnet ist, eine äußere Oberfläche der genannten, mindestens einen der genannten Wände angepasst ist, um die durch die genannte Mehrzahl elektrochemischer Zellen erzeugte thermische Energie abzuleiten; und
- einen Film (33) mit geringer Reibung, der zwischen den elastischen Wärmesenkenpolstern (18) und der inneren Oberfläche der genannten, mindestens einen der genannten Wände angeordnet ist, wobei der genannte Film angepasst ist, um die Relativbewegung zwischen den genannten elastischen Wärmesenkenpolstern und der genannten, mindestens einen der genannten Wände zu erleichtern; und
- eine Wärmeaustausch-Vorrichtung, die angrenzend an die genannte äußere Oberfläche der genannten mindestens einen der genannten Wände angeordnet ist, wobei die genannte Wärmeaustausch-Vorrichtung zur Übertragung thermischer Energie von der genannten äußeren Oberfläche der genannten mindestens einen den genannten Wände zu einem flüssigen Medium angepasst ist.

## Revendications

1. Générateur électrochimique à polymère comprenant :
- une pluralité de cellules électrochimiques, chacune comprenant une pluralité de stratifiés électrochimiques et au moins une borne de collecte de courant, ladite borne de collecte de courant ayant des bras aptes à recevoir ladite pluralité de stratifiés électrochimiques ;
- une matière élastique dissipatrice de chaleur placée adjacente et en contact mécanique avec ladite au moins une borne de collecte de courant, ladite matière élastique dissipatrice de chaleur étant électriquement résistive et thermiquement conductrice ;
- un boîtier structurel thermiquement conducteur ayant des parois enfermant ladite pluralité de cellules électrochimiques et ladite matière élastique dissipatrice de chaleur, une face interne d'au moins une desdites parois étant placée adjacente à ladite matière élastique dissipatrice de chaleur et en contact thermique avec ladite matière élastique dissipatrice de chaleur, une surface externe de ladite au moins une desdites parois étant apte à dissiper de l'énergie thermique engendrée par ladite pluralité de cellules électrochimiques ; et
- un film (33) à frottement réduit placé entre la matière élastique (18) dissipatrice de chaleur et la face interne de ladite au moins une desdites parois, ledit film étant apte à faciliter le déplacement relatif entre ladite matière élastique dissipatrice de chaleur et ladite au moins une desdites parois.

2. Générateur électrochimique à polymère selon la revendication 1, dans lequel ladite matière élastique dissipatrice de chaleur se conforme au moins partiellement aux contours de ladite au moins une borne de collecte de courant.

3. Générateur électrochimique à polymère selon la revendication 1, dans lequel ladite matière élastique dissipatrice de chaleur est divisée en une pluralité de tampons s'étendant suivant la longueur de ladite au moins une borne de collecte de courant.

4. Générateur électrochimique à polymère selon la revendication 3, dans lequel chacun de ladite pluralité de tampons comprend une bande de film à frottement réduit placée entre la matière élastique dissipatrice de chaleur et la face interne de ladite au moins une desdites parois.

5. Générateur électrochimique à polymère selon la revendication 4, dans lequel ladite bande de film à frottement réduit comprend des extensions vers l'intérieur aptes à circonscrire et à séparer, de rubans adjacents, chaque tampon de matière élastique dissipatrice de chaleur.

6. Générateur électrochimique à polymère selon la revendication 1, comprenant en outre un dispositif d'échange de chaleur placé adjacent à ladite face externe de ladite au moins une desdites parois, ledit dispositif d'échange de chaleur étant apte à transférer de l'énergie thermique de ladite face externe de ladite au moins une desdites parois à un milieu fluide.

7. Générateur électrochimique à polymère selon la revendication 6, dans lequel ledit dispositif d'échange de chaleur comprend des ailettes en saillie aptes à dissiper de l'énergie thermique engendrée par lesdites cellules électrochimiques.

8. Générateur électrochimique à polymère selon la revendication 6, dans lequel ledit dispositif d'échange de chaleur inclut des canaux aménagés à l'intérieur de ladite au moins une desdites parois, dans lequel le transfert de chaleur s'accomplit par circulation, dans lesdits canaux, d'un fluide de refroidissement sous forme liquide.

9. Générateur électrochimique à polymère selon la revendication 7, dans lequel on fait circuler de l'air autour desdites ailettes en saillie pour dissiper de l'énergie thermique engendrée par lesdites cellules électrochimiques.

10. Générateur électrochimique à polymère selon la revendication 1, dans lequel ladite matière élastique dissipatrice de chaleur est sous la forme de tampons s'étendant suivant la longueur de ladite pluralité de cellules électrochimiques.

11. Générateur électrochimique à polymère selon la revendication 1, dans lequel ladite matière élastique dissipatrice de chaleur est un composé élastomère à base de silicone incluant une charge de céramique thermiquement conductrice.

12. Générateur électrochimique à polymère selon la revendication 11, dans lequel ladite charge de céramique thermiquement conductrice est choisie à partir du groupe constitué d'oxyde de béryllium, de nitrure de bore, d'alumine et d'oxyde d'aluminium.

13. Générateur électrochimique à polymère comprenant :
- une pluralité de cellules électrochimiques, chacune comprenant une pluralité de stratifiés électrochimiques et au moins une borne de collecte de courant, ladite borne de collecte de courant ayant des bras aptes à recevoir ladite pluralité de stratifiés électrochimiques ;
- des tampons élastiques dissipateurs de chaleur placés adjacents et en contact mécanique avec ladite au moins une borne de collecte de courant, lesdits tampons élastiques dissipateurs de chaleur étant électriquement résistifs et thermiquement conducteurs ;
- un boîtier structurel thermiquement conducteur ayant des parois enfermant ladite pluralité de cellules électrochimiques et lesdits tampons élastiques dissipateurs de chaleur, une face interne d'au moins une desdites parois étant placée adjacente auxdits tampons élastiques dissipateurs de chaleur et en contact thermique avec lesdits tampons élastiques dissipateurs de chaleur, une surface externe de ladite au moins une desdites parois étant apte à dissiper de l'énergie thermique engendrée par ladite pluralité de cellules électrochimiques ;
- un film (33) à frottement réduit placé entre lesdits tampons élastiques (18) dissipateurs de chaleur et la face interne de ladite au moins une desdites parois, ledit film étant apte à faciliter le déplacement relatif entre lesdits tampons élastiques dissipateurs de chaleur et ladite au moins une desdites parois ; et
- un dispositif d'échange de chaleur placé adjacent à ladite face externe de ladite au moins une desdites parois, ledit dispositif d'échange de chaleur étant apte à transférer de l'énergie thermique de ladite face externe de ladite au moins une desdites parois à un milieu fluide.
